# EUROPEAN PATENT APPLICATION

(11) **EP 3 114 973 A1**
(43) Date of publication of application: **11.01.2017**
(21) Application number: 16178451.7
(22) Date of filing: 07.07.2016
(51) Int. Cl.: A47J 37/04, A47J 37/07

(54) **MULTI-ZONE SPIT-ROTISSERIE DEVICE FOR MEAT ROASTING AND GRILLING**

(30) Priority: 09.07.2015 US 201562190271 P
(71) Applicant: KITCHEN-LINE ORI LTD, 4900617 Petach-Tikva (IL)
(72) Inventor: ZVI LAVIE, Ori, 4900617 Petach-Tikva (IL)
(74) Representative: Boult Wade Tennant

(57) **Abstract**

A rotisserie configured for roasting meat cuts or meat mass comprises: horizontal surface; horizontal spit configured for translational movement above said horizontal surface; and at least one heating zone.

## Description

### Technical Field

The present invention pertains to meat grilling and roasting devices. In particular, the present invention pertains to devices that comprise a plurality of zones for meat grilling and roasting meat that are separate from each other, and most particularly to horizontal instead of vertical spit-roasting of shawarma.

### Background

Rotisserie is a style of roasting where meat is skewered on a spit, which is a long solid rod usually made of stainless steel and used to hold food while it is being cooked over a fire in a fireplace or over a campfire, or roasted in an oven. Large joints of meat or entire animals, such as pigs or turkeys are usually cooked with this method, where the rotation cooks the meat evenly in its own juices and allows easy access for continuous self-basting. Mechanical and electrical turnspits ("roasting jacks") were invented to turn the spit around its axis over a heat source such as coals or open fire or within a heated oven.

Horizontal rotisserie is when the spit and meat skewered on it are mounted horizontally over a heat source. This method is usually used for cooking whole chickens or roasts of various meats including beef and pork. The design may include a single spit mounted over an open broiler or grill, a single spit mounted within an otherwise-conventional oven, or many spits mounted within a large industrial oven. The latter are commonly used to mass-produce roasted meats for sale to consumers. Skewering skill is required to roast meat with this style of rotisserie to keep the meat to be cooked balanced without weighing heavily on the drive mechanism or causing it to fail.

The speed of rotation is important especially when roasting over coals or open fire, since then the dripping of juices off the roasted meat cannot be salvaged after falling into the heat source. Therefore, rotation should be slowed down after the crust is starting to form to prevent dripping of juices off of the roasted meat. For a horizontal spit, it is also preferable to keep the roast further away from the heat source in the beginning, which minimizes infrared heating while preserving air convection heating. Later on, the roast is brought closer, thus combining intense convection and radiation heating.

Vertical Rotisserie is the other common style of in which the heat is applied directly from the side or convected up from below. This feature is useful for shawarma, which is a mixed mass of meat made of different types, for example, cattle, lamb, veal, turkey and chicken, and that is typically shaved off a bit at a time. In this style of rotisserie, balance of the load is less important than with a horizontal rotisserie.

Today, there does not seem to exist horizontal spit-rotisserie for shawarma. Quite the contrary, since the large cylindrical shape mass of shawarma is more difficult to balance and handle in horizontal configuration vertical spit-rotisserie is used for this. However, recognizing the benefits in horizontal spit-rotisserie motivated the inventors of the present invention to design a device for roasting and grilling meat, particularly, shawarma, in horizontal configuration. Further, horizontal spit-rotisserie is done under constant heating, and, therefore, limits the control over the roasting process.

It is, therefore, an object of the present invention to provide horizontal spit-rotisserie device for roasting and grilling shawarma. Such device takes into consideration the different conditions required for proper roasting of shawarma mass in horizontal position.

It is yet another object of the present invention that the device of the present invention comprises different zones for grilling and roasting meat independent from each other.

It is yet another object of the present invention that the device of the present invention provides control over applied heat sources and roasting process of meat.

This and other objects and particular aspects and features of the device of the present invention are better understood from the description in the following sections of the present application.

### Summary of the Invention

In one aspect, the present invention provides a rotisserie for roasting meat cuts or meat mass, particularly shawarma, where the rotisserie comprises a spit that is configured for translational movement between and into heating zones in the rotisserie. Such spit can be brought closer or farther from heat sources in these heating zones and more efficiently control the roasting and grilling of meat mounted on the spit rod.

In general the rotisserie comprises a horizontal surface and horizontal spit placed above that surface and fixed to vertical supports on its sides. The translational movement of the spit is enabled with serrated rails at the sides of the horizontal surface and handles connected to the vertical supports. The handles are configured to lock the supports in grooves in the serrated rail groove-tooth coupling and lock the spit in place when they are in position parallel to the horizontal surface. When the handles are turned 90°outwards, the supports are released and the spit can be moved forward and backward into and between any of the heating zones of the rotisserie.

A meat mass mounted on the spit is held and continuously condensed between disks couplings on both sides. Each of the disks couplings themselves are pressed against the meat mass between them with a coupling of spring and stopper, where the spring is locked between central insertion in the smaller of the disks couplings and the stopper. The disks couplings with larger and smaller disk in each coupling are used to keep the meat mass between the couplings continuously condensed during reduction in its size as more and more meat portions are cut off of it. When reaching a sufficiently reduced size, the larger disks are released from the couplings and the meat mass is condensed between the smaller disks that remain inserted on the spit rod. As the meat mass, particularly shawarma, is roasted with time and reduced in size, fatty portions of it are exposed which makes it less condensed and stable as required. Therefore, the smaller disk is pressed against it by the spring and stopper couplings and keeps it intact. The tension of the spring may be adjusted as well according to the pressure to be applied on the disks, by releasing it from the stopper and fastening it again in a new position.

The number of heating zones may vary in the rotisserie. In one particular embodiment, the heating zone is located on the rear side, front side or top of said rotisserie. In still another particular embodiment, the heating zone on the rear side comprises heat source on a plane below the horizontal surface and spit, the heating zone on the front side comprises heat source on the horizontal surface below the spit, and the heating zone on the top comprises heat source above the spit.

In one particular non-limiting embodiment, there are three main potential heating zones, each zone comprising the same or different heat source. One heating zone is located at the rear side of the rotisserie as a tray with a surface lower than the horizontal surface of the rotisserie. The tray may contain different types of heat generators. Particular non-limiting examples of heat generators are charcoal bed, gas burners and electric heaters. The number of heat generators of each type and the number of types in each heating zone may also vary depending on the desired heat intensity and heating requirements. For example, the tray may contain also a layer/bed of basalt stones, which is efficient in absorbing and radiating heat released by a heat generator. Such bed of basalt stones may be combined with any heat generator, particularly those listed above.

A second heating zone may be a griddle at the front side of the rotisserie on the plane of the horizontal surface. The griddle may be used to provide further roasting to meat portions cut off from a meat mass or meat cuts mounted on the spit and also as working plate for collecting and preparing a serving for diners. The heat generator of the griddle may be one or more electric heaters located beneath it. Particularly, the griddle may be divided in two or more sections, where the temperature of each section is independently controlled by separate electric heater(s). This provides the advantage of roasting different types of meat and food in general at different temperatures on a single surface of a griddle.

A third heat zone may be provided with a top heat source comprising housing with heat generators located within and energy feeding channel connected to the heat generators. Such heat generators may be of any type, in particular electric heaters, halogen lamps and gas burners, with electric wirings or gas feeding tubes connected to them, as the case may be. The heat intensity from the top heat source can be controlled by mode switch that can turn on and off any number of heat generators in the housing. Accordingly, the top heat source provides further heating to meat mass or meat cuts mounted on the spit from above and may shorten the time of roasting and/or provide additional flavor and crust to the meat. Such top heat source may be fixed in its elevated position by mechanically connecting its sides to vertical supports. It may also be configured to move axis up and down along a vertical. Such movement is made with locking means that lock it in any position between its upper and lower points and handles moved horizontally between 0° and 90° relative to the housing and accordingly lock and release the top heat source.

The top heat source may also be either fixed in its position parallel to the spit. Alternatively, it may be adjusted at any angle between 0° and 90° relative to the spit. Such rotation may be enabled with rotating and locking mechanism and provide the advantages of radiating heat to the meat on the spit at a particular angle, and further control on the roasting.

In one particular embodiment, the rotisserie of the present invention comprises every possible heat zone for roasting meat either mounted on the spit, particularly the heat zones detailed above and further described and illustrated with reference to the accompanying drawings. The spit may then be moved between the heat zones and control the roasting of the meat and provide additional flavors and/or crust as desired.

The heat zones may also be used independently for directly grilling or roasting meat or any type of food over the heat sources in these heat zones. For example, a charcoal bed in the rear side of the rotisserie may be used to roast meat chunks mounted on skewers placed above the charcoal bed. The griddle in the front may be used to directly roast meat or vegetables added to a serving.

Thermostats at the front panel are used to control the temperature in the heat zones independently of each other, and ventilation apparatus is used with vent outlets at the rear panel to release excessive heat away from the rotisserie. Further control on the roasting of and meat mass or meat cuts mounted on the spit is provided with a pedal pressed by an operator to control the rotational movement of the spit. This enables slowing down or speeding up the roasting of the meat, particularly for preventing excessive roasting when portions of meat are not cut off of it, and also provides even roasting.

Heat sensors are in thermal communication with the different heating zones, monitoring temperature and providing better supervision to the operator of the rotisserie.

Electric socket at the front panel of the rotisserie is used to plug electric knife for easy and convenient cutting of meat portions off of meat mass or meat cuts on the spit. In alternative embodiments, the spit is divided in two parts rotatable 90° independently of each other between open and closed positions above the main surface of the rotisserie and at its sides. This may be effected with gearwheel mechanism and handles connected to each part of the spit that enable moving it between the two positions. The advantage of such configuration is the further control on the roasting process, allowing the separate and simultaneous roasting of different types of meat cuts or meat mass that require different conditions of heat and time.

The following numbered clauses show further illustrative examples:
1. A rotisserie configured for roasting meat cuts or meat mass comprising:
   horizontal surface;
   horizontal spit configured for translational movement above said horizontal surface; and
   at least one heating zone.
2. The rotisserie according to clause 1, wherein said horizontal spit configured for translational movement comprises:
   stainless steel rod having length approximately equivalent to width of said rotisserie; vertical supports, each vertical support on one side of said rod, said vertical supports mechanically connected each to one end of said rod;
   two pairs of disks comprising each larger and smaller disk couplings mounted each on one side of said rod;
   spring and stopper couplings mounted on said rod, each spring of said couplings fastened to each of said smaller disk on one end and to said stopper on a second end; and
   vacant length between said two pairs of larger and smaller disk couplings configured for loading meat mass or meat cuts.
3. The rotisserie according to clause 2, wherein said larger disk comprises a slot configured for inserting said rod, and pins on sides of closed end of said slot, said smaller disk comprising central hole in the middle configured for inserting said rod, and holes at the sides of said central hole configured for inserting and locking said pins.
4. The rotisserie according to clause 2 or clause 3, wherein said larger disk comprises a slot configured for inserting said rod, and pins at the sides of closed end of said slot, said smaller disk comprises a slot configured for inserting said rod, and holes at the sides of closed end of said slot, said pins configured to insert and lock within said holes.
5. The rotisserie according to any of clauses 2 to 4, wherein said spring and stopper couplings configured to lock said larger and smaller disk couplings in position and press them against meat mass or meat cuts mounted on said rod between said larger and smaller disk couplings.
6. The rotisserie according to any of clauses 2 to 5, wherein said vertical supports comprise weights configured for stabilizing said rod in horizontal position.
7. The rotisserie according to any of clauses 2 to 6, wherein each of said vertical supports comprises a handle configured for locking said rod in position and moving it in translational movement, said rotisserie comprising serrated rails at each side of said horizontal surface and in mechanical communication with said vertical supports, said vertical supports configured to lock within said serrated rails with groove-tooth coupling and lock said spit in position after said translational movement.
8. The rotisserie according to any preceding clause, wherein said heating zone is located on the rear side, front side or top of said rotisserie.
9. The rotisserie according to clause 8, wherein said heating zone on said rear side comprises heat source on a plane below said horizontal surface and spit, said heating zone on said front side comprises heat source on said horizontal surface below said spit, said heating zone on said top comprises heat source above said spit.
10. The rotisserie according to clause 9, wherein said heat source is a tray positioned at rear side of said rotisserie on a plane lower than said horizontal surface.
11. The rotisserie according to claim 10, wherein said tray, said tray comprises charcoal bed.
12. The rotisserie according to clause 11, further comprising a bed of basalt stones positioned above said charcoal bed.
13. The rotisserie according to clause 10, wherein said tray comprises heat generators selected from electric heaters and gas burners.
14. The rotisserie according to clause 9, wherein said heat source on said horizontal surface comprises a griddle positioned at the front side of said rotisserie and at least one electric heater positioned below said griddle.
15. The rotisserie according to clause 14, wherein said griddle comprises two electric heaters, wherein each of said electric heaters is positioned below half of surface of said griddle and configured to independently heat said half of surface of said griddle.
16. The rotisserie according to clause 14 or clause 15, wherein said griddle is inclined towards the edge of said rotisserie, said edge comprising a trough configured for collecting fluids flowing out of meat mass mounted on said spit.
17. The rotisserie according to clause 9, wherein said heat source on said top is heat radiator positioned above said spit, said top heat radiator comprises housing, vertical supports configured to hold said top heat radiator above said spit, heat generators selected from heaters, halogen lamps and gas burners and heat-proof cover at the lower side of said housing.
18. The rotisserie according to clause 17, wherein said heat-proof cover is made of tempered glass or ceramic board.
19. The rotisserie according to clause 17 or clause 18, wherein said heat source further comprises a layer of basalt stones positioned lower than said heat generator.
20. The rotisserie according to any one of clauses 17 to 19, wherein said heat generators comprise at least two heaters, at least two halogen lamps or at least two gas burners.
21. The rotisserie according to any one of clauses 17 to 20, wherein said heat source further comprises mode switch configured for adjusting heat radiating from said heat generators.
22. The rotisserie according to any one of clauses 17 to 21, wherein said top heat source further comprises telescopic tubes arrangement within said vertical supports and handles, each handle at each side of said housing and in mechanical communication with said telescopic tubes arrangement, said telescopic tubes arrangement and handles configured to move said top heat source vertically along said vertical supports.
23. The rotisserie according to any one of clauses 17 to 22, wherein said top heat source is configured to be rotated and locked at any angle between 0° and 90° relative to said spit.
24. The rotisserie according to any preceding clause, further comprising thermostats for adjusting temperature of said at least one heating zone.
25. The rotisserie according to any preceding clause, further comprising heat sensors in thermal communication with said at least one heating zone.
26. The rotisserie according to any preceding clause, further comprising a pedal configured for controlling rotational movement of said spit with pressure applied by an operator.
27. The rotisserie according to any preceding clause, further comprising air vents configured for expelling excessive heat off of said rotisserie.
28. The rotisserie according to any preceding clause, further comprising power socket for connecting electric knife configured for cutting meat off of said meat mass or meat cuts.
29. The rotisserie according to any preceding clause, wherein said spit is divided in two parts, each part comprising gearwheel mechanism configured for rotating said part of said spit 90° between open and closed positions.
30. A rotisserie configured for roasting meat cuts or meat mass comprising:
   horizontal surface comprising a griddle at the front side and at least one electric heater positioned below said griddle;
   horizontal spit configured for translational movement above said horizontal surface and comprising:
      stainless steel rod having length approximately equivalent to width of said rotisserie;
      vertical supports, each vertical support on one side of said rod, said vertical supports mechanically connected each to one end of said rod;
      two pairs of disks comprising each larger and smaller disk couplings mounted each on one side of said rod;
      spring and stopper couplings mounted on said rod, each spring of said couplings fastened to each of said smaller disk on one end and to said stopper on a second end; and
      vacant length between said two pairs of larger and smaller disk couplings configured for loading meat mass or meat cuts;
   a tray positioned at rear side of said rotisserie on a plane lower than said horizontal surface, said tray comprising at least charcoal bed; and
   a top heat radiator positioned above said spit, said top heat radiator comprises housing, vertical supports configured to hold said top heat radiator above said spit, heat generators selected from heaters, halogen lamps and gas burners and a cover made of tempered glass or ceramic board at the lower side of said housing.

### Brief Description of the Drawings

**Figs. 1 -4** illustrate different views of the device of the present invention.
**Figs. 5A-5B** display front and back perspective views of the device of the present invention.
**Fig. 6** is a front view scheme of the front side of the device of the present invention.
**Fig. 7** is a perspective side view middle part of the back side of the device.
**Fig. 8** is a front view focused on the middle part of the back side of the device.
**Fig. 9** shows the structure of a large or small stopper placed on the skewer of the device.
**Fig. 10** shows a grooved large disk mounted on and locked to the skewer of the device with means for locking to a small disk.
**Fig. 11** shows the small disk with central insertion for the device and means for locking to the large disk.
**Fig. 12** shows the conjoint assembly of the small and large disks in locking state one to the other.
**Fig. 13** shows the conjoint assembly of stopper, spring and disks assembly mounted on the skewer of the device.

### Detailed Description of the Drawing

In the detailed description, numerous specific details are set forth in order to provide a thorough understanding of the invention. However, it will be understood by those skilled in the art that these are specific embodiments and that the present invention may be practiced also in different ways that embody the characterizing features of the invention as described and claimed herein.

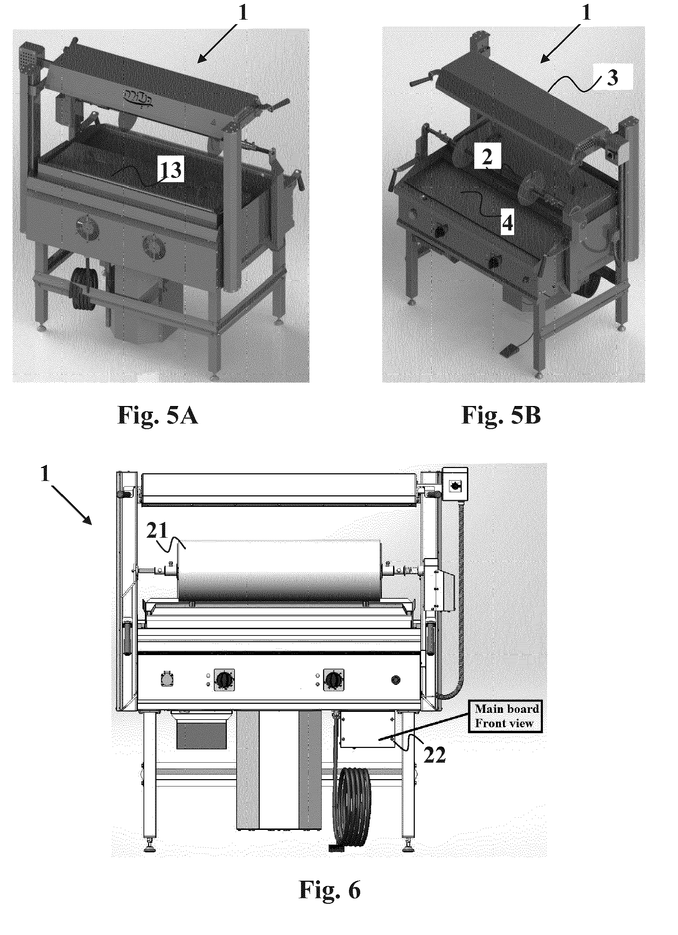

In general, the rotisserie of the present invention comprises at least one heat source located in its back, front or top sections and a movable spit that may be horizontally displaced above or under these heat sources. **Figs. 5A** and **5B** display front and back perspective views of a particular example of a multi-zone rotisserie (**1**) of the present invention with a coal tray located in the back (**13**), griddle located at the front (**4**) and gas or heat radiator located at the top (**3**). The spit (**2**) is movable to and away from each one of these heat sources and provides control on the roasting of meat placed on it. **Fig. 6** is a front view of the rotisserie (**1**) illustrating shawarma mass (**21**) mounted on the spit and grilled below heat radiator and above front griddle and back tray.

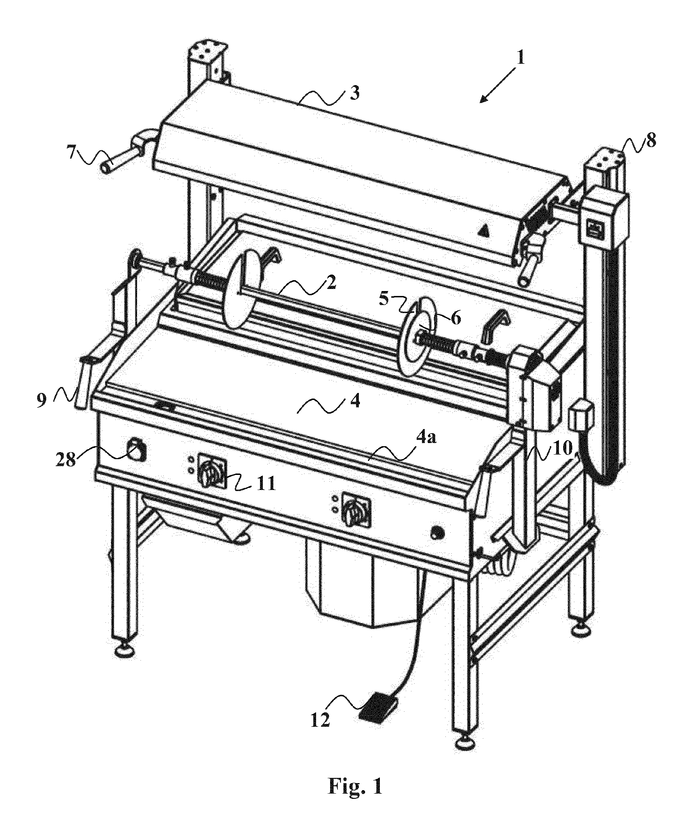

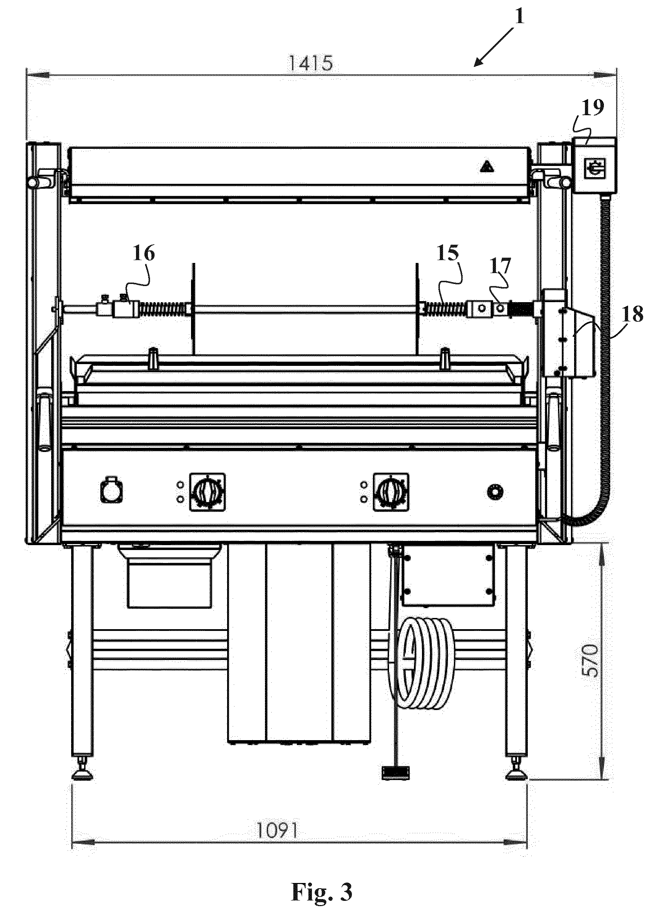

**Figs. 1-4** are schematic illustrations of different views of the particular example of rotisserie (**1**) shown in **Figs. 5A** and **5B****.** The spit (**2**) is located above the main platform of the rotisserie (**1**) that comprises the griddle (**4**) at the front and covered coal tray (**13**) at the back. Top heat source (**3**) may comprise any heat generator for roasting meat. Possible particular examples of heat generator for the top heat source (**3**) are halogen lamps, conduction coils and reflectors, heat radiators and open fire such as gas burners. Basalt bricks are accommodated at the housing of the top heat source to absorb the heat generated by any heat source located within and radiate it more efficiently on the meat on the spit (**2**).

All types of heat generators for the top heat source (**3**) may extend along the entire length of housing of the heat source (**3**) and distribute heat evenly along its entire length. Alternatively, the top heat source (**3**) may be divided into two zones, each zone radiating or producing heat separately and independently from the other zone. Such division provides better control on the heat and roasting of meat on the spit (**2**). It may also benefit in selective heating of different parts of the meat on the spit (**2**). A heat mode switch (**19**) for determining the level of heat radiating from the top heat source (**3**) is in communication with the heat generators for selectively turning them on and off. Accordingly, the time and level of roasting the meat on the spit (**2**) below are further controlled by a user. The heat generators in the top heat source (**3**) may be shielded with tempered glass or ceramic board or remain exposed depending on the heating, grilling and/or searing desired effect on the meat on the spit (**2**).

Top heat source (**3**) may be fixed and stabilized in place with supports (**8**) at its sides holding it in horizontal position above the spit (**2**). Alternatively, the top heat source (**3**) may comprise adjustable axes at its sides and complementing locking mechanism that enable to position it at an angle anywhere between 0° and 90° relative to the spit (**2**). Further, the particular example of rotisserie (**1**) in **Figs. 1-4** shows handles (**7**) attached to the top heat source (**3**) and supports (**8**) on it sides for lowering it relative to the spit (**2**) and allowing the meat mounted on the spit (**2**) to absorb a higher amount of heat. The handles (**7**) keep the top heat source (**3**) in locked position when aligned in parallel relative to it and release it when rotated 90° horizontally outwards. Supports (**8**) comprise telescopic arrangement of tubes on both sides of the top heat source (**3**) so that applying force on the handles (**7**) in their released position enables moving the top heat source (**3**) vertically down towards the spit (**2**) and up to its initial position.
The griddle (**4**) is a metal plate with heat source below and serves as a surface for additional roasting of meat portions that are cut off of the meat parts or mass mounted on the spit (**2**) and collected on the griddle (**4**). The griddle (**4**) is slightly inclined towards the edge of the rotisserie (**1**) to allow the flow of extra fluids that has not evaporated by the heat of the griddle (**4**) out to a trough (**4a**). A single heat generator may be used to evenly heat the surface of the griddle (**4**) from beneath. Alternatively, independently operated and controlled two heat generators or more may be installed under the griddle (**4**). This actually forms separate heating areas on the griddle (**4**) enabling roasting different types of food at different temperatures on the same griddle. Efficiency is also improved by controlling the number of operating heat generators and using only part of the area of the griddle (**4**).

The rear heat source (**13**) provides another option of roasting meat with a charcoal bed in a tray. The charcoal bed is however optional to other heat generators that may be used for the rear heat source (**13**) such as gas burners. In another option, basalt stones may be placed in the tray of the heat source (**13**) over a heat generator and provide efficient and economic heat radiation for roasting meat mounted on the spit (**2**). In all options of charcoal bed and gas burners with or without a layer of basalts stones, the rear heat source (**13**) may be used to participate in roasting meat mounted on the spit (**2**) and/or meat held on skewers that are placed directly over the heat generator.

The spit (**2**) is rotated around its axis for even roasting of the meat mass or cut mounted on it and is also movable horizontally relative to the front and back zones of the rotisserie (**1**). Such translational movement enables controlling the roasting of meat on the spit (**2**) by bringing it closer to or farther from the heat sources (**3, 4, 13**) in addition to controlling the heat level of the heat generators. The horizontally movable spit (**2**) may be brought above the rear heat source in the tray in the back or the front griddle (**3**) of the rotisserie (**1**) and absorb direct heat and particular flavors. Vertical supports (**10**) lock the spit (**2**) on its two sides and stabilize its horizontal position with weights. The translational movement of the spit (**2**) is done by moving the supports (**10**) horizontally along a dented rail. Rotational handles (**9**) are connected to the supports (**10**) and lock it in position when in parallel position relative to the sides of the rotisserie (**1**). When turned 90° outwards, the handles (**9**) release the supports (**10**) from the dent in the rail and allow advancing it forward or backward by applying physical force on them. Gearwheels within box (**18**) are used to move the supports (**10**) along the dented rails.

Rotation of the spit (**2**) around its axis is controlled by pedal (**12**) pressed by a user that operates the rotisserie (**1**). The control on the speed of rotation of the spit (**2**) allows the user to control the roasting of the meat mass or cuts (**21**), preventing excessive crust on its outer surface and keeping its juices.

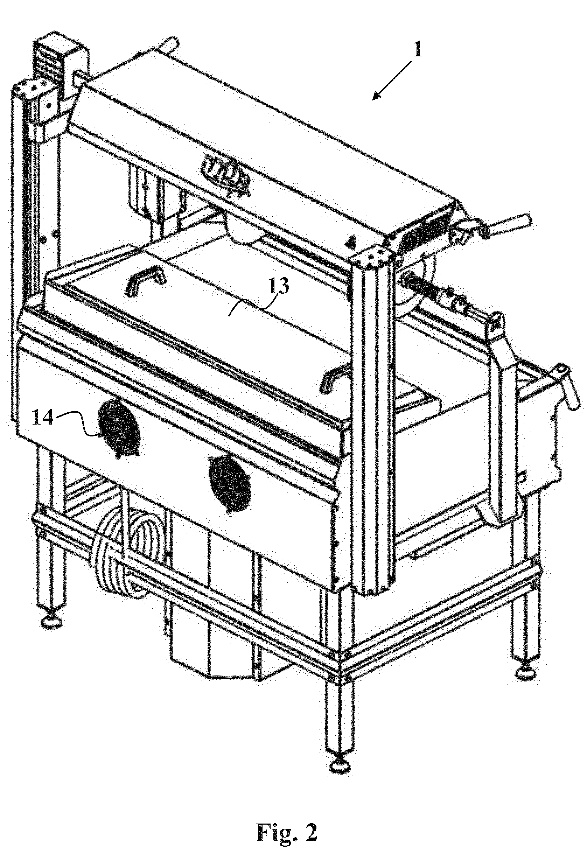

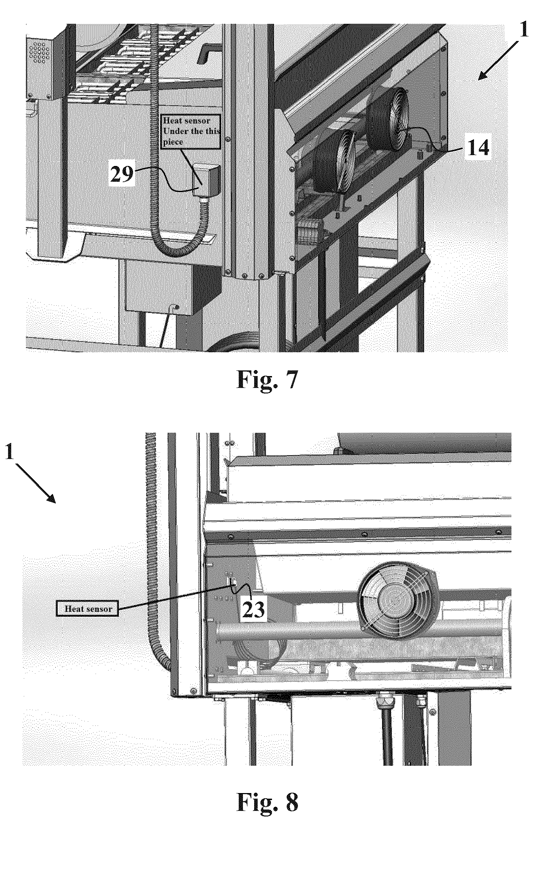

In the front panel, buttons (**11**) are used to control the temperature of the heat generators in the different heat sources and power socket (**28**) is used to plug electric knife for cutting parts of the meat mass (**21**). In the parallel rear panel, venting outlet (**14**) (see **Figs. 2****,** **7**, for example) are used to air-cool the rotisserie (**1**) that generates very large amount of heat during operation. To measure the temperature, heat sensor (**23**) is located on the rear panel of the rotisserie (1) in proximity to the venting outlets (**14**). A second heat sensor (**29**) (see **Fig. 7**) is placed at the side of the rotisserie (**1**) at the entrance to conduit (**31**), which is in communication with heat generators at the top heat source (**3**). Heat sensor (**29**) monitors the temperature at the top heat source and enables the user to reduce or elevate the heat radiating from above and keep the meat mass (**21**) below properly roasted without too much loss of liquids or excessive formation of outer crust.

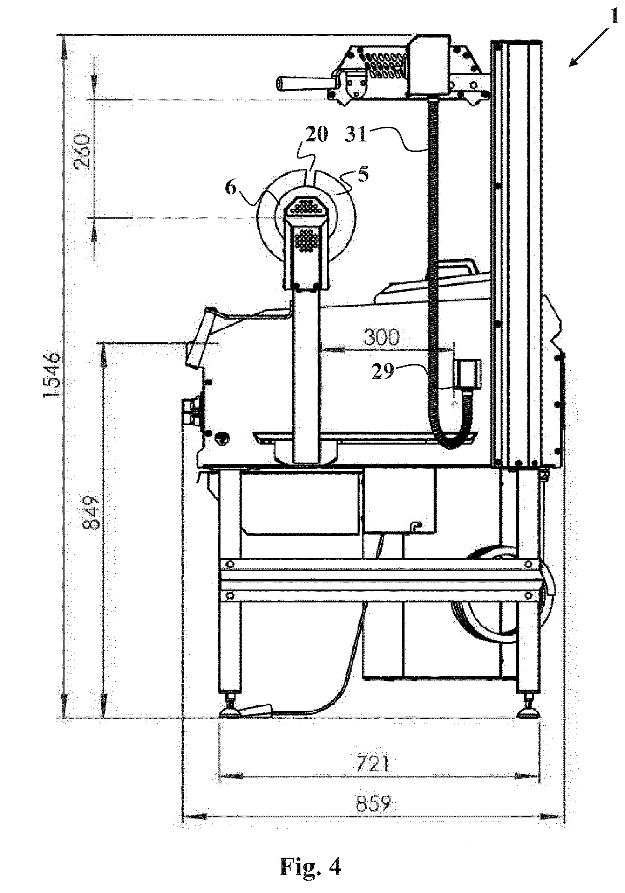

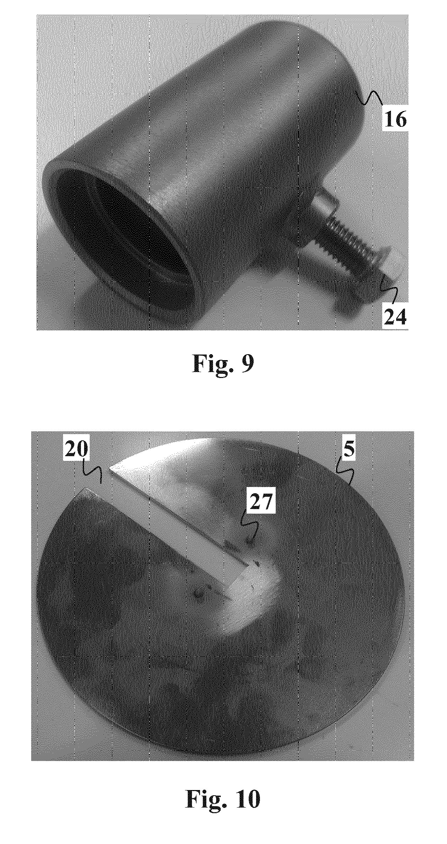

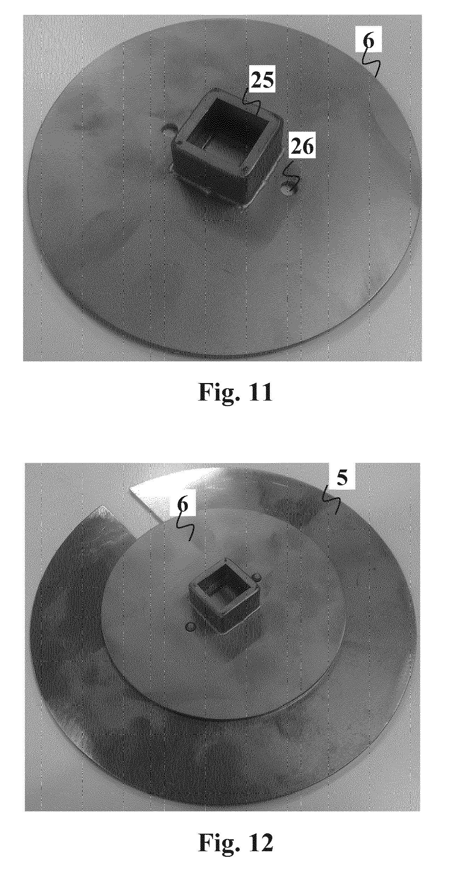

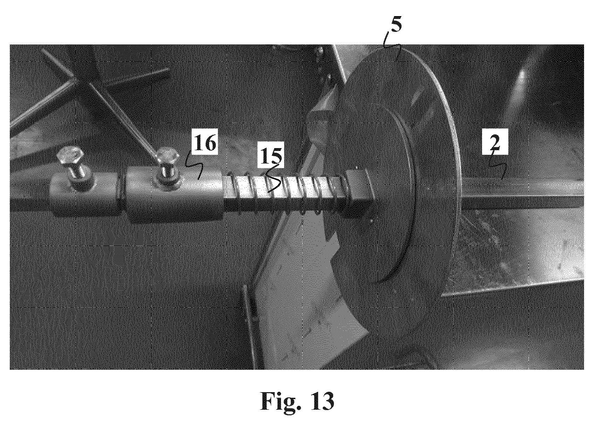

The meat mass, especially shawarma, see for example (**21**) in **Fig. 6**, is secured with two pairs of disks (**5**, **6**) mounted on the spit (**2**) one pair on each side. Groove (**20**) in the larger disk (**5**), seen better in **Fig. 4**, is sufficiently wide to accommodate the spit (**2**) when inserted into it. The small disk (**6**) may also comprise a groove with sufficient width to accommodate the spit (**2**). The two disks are mounted on the spit (**2**) with their grooves positioned opposite each other. They are then fastened to each other with pin-hole couplings, see **Figs. 10-13**, and lock together on the spit (**2**). Alternatively, the smaller disk (**6**) comprises a central hole (**25**) with dimensions sufficient to insert the spit (**2**) through. The smaller disk (6) is then locked to the larger disk (5) with pin-hole couplings (**27, 26**) as seen in **Figs. 10-11**. The diameter of the meat mass (**21**), particularly shawarma, is not larger than the diameter of the larger disk (**5**), and the couplings of the two disks (**5, 6**) confines the meat mass (**21**), along a selected part of the spit (**2**) and keeps it condensed state. When cuts are taken off of the meat mass (**21**), its size reduces, and at certain size the larger disk (**5**) is released from the smaller disk (6), that then serves as the boundary for the meat mass (**21**) from both sides and keeps it in condensed form.

Spring (**15**) and stopper (**16**) coupling is used on each side of the spit (**2**) to maintain the coupled disks (**5, 6**) in fixed position and press them against the meat mass (**21**) at the center of the spit (**2**). The spring is inserted into stopper (**16**) on one end and hole (**25**) of the smaller disk (**6**) on the opposite end. It is adjusted and stretched according to the desired pressure to be applied on the meat mass (**21**) between the two pairs of disks (**5, 6**). After proper adjustment of spring (**15**) is obtained, screw (**24**) locks its position within stopper (**16**) and secures the pairs of disks (**5, 6**) and meat mass (**21**) in place. The pressure applied to the meat mass (**21**) is necessary, since it loses mass, liquids and fats during roasting and cutting pieces of meat off of it. This creates gaps and voids within the meat mass (**21**) and, therefore, requires further condensing to keep it stable on the spit (**2**).

### List of Parts of the Rotisserie

**1** - Rotisserie
**2** - Spit
**3** - Top heat source
**4** - Front heat source and griddle
**4a** - trough for collecting fluids from griddle
**5** - Large disk
**6** - Small disk
**7** - Top heat source lever
**8** - Telescopic support for top heat source
**9** - Spit handle for horizontal movement
**10** - Spit stabilizing weight
**11** - Thermostat
**12** - Spit speed control pedal
**13** - Back heat source and grilling
**14** - Ventilation exits
**15** - Spring
**16** - Large stopper
**17** - Small stopper
**18** - Gearwheels for height of top heat source
**19** - Mode switch for heat intensity
**20** - Large disk groove
**21** - Meat mass
**22** - Main control board
**23** - Heat Sensor
**24** - Large/small stopper screw
**25** - Small disk central hole
**26** - Small disk pin hole
**27** - Large disk hole
**28** - Power socket
**29** - Heat sensor

It is to be understood that the invention is not limited in its application to the details set forth in the description contained herein or illustrated in the drawings. The invention is capable of other embodiments and of being practiced and carried out in various ways. Those skilled in the art will readily appreciate that various modifications and changes can be applied to the embodiments of the invention as hereinbefore described without departing from its scope, defined in and by the appended claims.

## Claims

1. A rotisserie configured for roasting meat cuts or meat mass comprising:
horizontal surface;
horizontal spit configured for translational movement above said horizontal surface; and
at least one heating zone.

2. The rotisserie according to claim 1, wherein said horizontal spit configured for translational movement comprises:
stainless steel rod having length approximately equivalent to width of said rotisserie; vertical supports, each vertical support on one side of said rod, said vertical supports mechanically connected each to one end of said rod;
two pairs of disks comprising each larger and smaller disk couplings mounted each on one side of said rod;
spring and stopper couplings mounted on said rod, each spring of said couplings fastened to each of said smaller disk on one end and to said stopper on a second end; and
vacant length between said two pairs of larger and smaller disk couplings configured for loading meat mass or meat cuts.

3. The rotisserie according to claim 2, wherein one or more of:
said larger disk comprises a slot configured for inserting said rod, and pins on sides of closed end of said slot, said smaller disk comprising central hole in the middle configured for inserting said rod, and holes at the sides of said central hole configured for inserting and locking said pins;
said larger disk comprises a slot configured for inserting said rod, and pins at the sides of closed end of said slot, said smaller disk comprises a slot configured for inserting said rod, and holes at the sides of closed end of said slot, said pins configured to insert and lock within said holes;
said spring and stopper couplings configured to lock said larger and smaller disk couplings in position and press them against meat mass or meat cuts mounted on said rod between said larger and smaller disk couplings; and
said vertical supports comprise weights configured for stabilizing said rod in horizontal position.

4. The rotisserie according to claim 2 or claim 3, wherein each of said vertical supports comprises a handle configured for locking said rod in position and moving it in translational movement, said rotisserie comprising serrated rails at each side of said horizontal surface and in mechanical communication with said vertical supports, said vertical supports configured to lock within said serrated rails with groove-tooth coupling and lock said spit in position after said translational movement.

5. The rotisserie according to any preceding claim, wherein said heating zone is located on the rear side, front side or top of said rotisserie.

6. The rotisserie according to claim 5, wherein said heating zone on said rear side comprises heat source on a plane below said horizontal surface and spit, said heating zone on said front side comprises heat source on said horizontal surface below said spit, said heating zone on said top comprises heat source above said spit.

7. The rotisserie according to claim 6, wherein said heat source is a tray positioned at rear side of said rotisserie on a plane lower than said horizontal surface.

8. The rotisserie according to claim 7, wherein said tray comprises charcoal bed or heat generators selected from electric heaters and gas burners.

9. The rotisserie according to claim 8, wherein said tray comprises charcoal bed and further comprising a bed of basalt stones positioned above said charcoal bed.

10. The rotisserie according to claim 9, wherein said heat source on said horizontal surface comprises a griddle positioned at the front side of said rotisserie and at least one electric heater positioned below said griddle.

11. The rotisserie according to claim 10, wherein said griddle comprises two electric heaters, wherein each of said electric heaters is positioned below half of surface of said griddle and configured to independently heat said half of surface of said griddle or wherein said griddle is inclined towards the edge of said rotisserie, said edge comprising a trough configured for collecting fluids flowing out of meat mass mounted on said spit.

12. The rotisserie according to claim 6, wherein said heat source on said top is heat radiator positioned above said spit, said top heat radiator comprises housing, vertical supports configured to hold said top heat radiator above said spit, heat generators selected from heaters, halogen lamps and gas burners and heat-proof cover at the lower side of said housing.

13. The rotisserie according to claim 12, wherein one or more of:
said heat-proof cover is made of tempered glass or ceramic board;
said heat source further comprises a layer of basalt stones positioned lower than said heat generator;
said heat generators comprise at least two heaters, at least two halogen lamps or at least two gas burners;
said heat source further comprises mode switch configured for adjusting heat radiating from said heat generators;
said top heat source further comprises telescopic tubes arrangement within said vertical supports and handles, each handle at each side of said housing and in mechanical communication with said telescopic tubes arrangement, said telescopic tubes arrangement and handles configured to move said top heat source vertically along said vertical supports; and
said top heat source is configured to be rotated and locked at any angle between 0° and 90° relative to said spit.

14. The rotisserie according to any preceding claim, further comprising one or more of:
thermostats for adjusting temperature of said at least one heating zone; heat sensors in thermal communication with said at least one heating zone; a pedal configured for controlling rotational movement of said spit with pressure applied by an operator; air vents configured for expelling excessive heat off of said rotisserie; and a power socket for connecting electric knife configured for cutting meat off of said meat mass or meat cuts.

15. The rotisserie according to any preceding claim, wherein said spit is divided in two parts, each part comprising gearwheel mechanism configured for rotating said part of said spit 90° between open and closed positions.
